# EUROPEAN PATENT APPLICATION

(11) **EP 4 851 802 A1**
(43) Date of publication of application: **09.12.2026**
(21) Application number: 26178976.2
(22) Date of filing: 15.05.2026
(51) Int. Cl.: G06F 9/50

(54) **RESOURCE SHARING FOR SENSOR SIGNAL PROCESSING**

(30) Priority: 03.06.2025 IN 202541053730
(71) Applicant: NXP B.V., 5656 AG Eindhoven (NL)
(72) Inventor: Brett, Maik, 5656AG Eindhoven (NL); Tuschen, Christian, 5656AG Eindhoven (NL); Lara Ambel, Juan, 5656AG Eindhoven (NL); Singh, Prabhjot, 5656AG Eindhoven (NL); Hesse, Siegfried Kay, 5656AG Eindhoven (NL)
(74) Representative: Schwarzweller, Thomas

(57) **Abstract**

A signal processing system is disclosed. The signal processing system includes processing circuits and orchestration circuitry. The processing circuits are shared among sensors. The orchestration circuitry receives a flow event associated with one sensor. The received flow event is associated with a flow that includes independent tasklets. The orchestration circuitry activates two independent tasklets, parallelly, based on the reception of the flow event. Further, the orchestration circuitry determines a set of processing circuits from the processing circuits associated with the signal processing system based on the activation of the two independent tasklets. The orchestration circuitry executes, parallelly, the two independent tasklets on the determined set of processing circuits.

## Description

### FIELD OF USE

The present disclosure relates generally to electronic devices, and, more particularly, to resource sharing for sensor signal processing.

### BACKGROUND

In today's digital world, sensors are ubiquitous, seamlessly embedded in a wide range of applications, including autonomous vehicles, surveillance, medical diagnostics, environmental monitoring, and industrial automation. In such applications, a signal processing system may interface with these sensors to leverage spatial and temporal diversity offered by multiple sensors. Such interfacing may enhance the reliability, accuracy, and coverage of sensing operations. However, due to resource constraints associated with the signal processing system, processing signals efficiently from multiple sensors may be challenging. Additionally, the computational complexity involved in handling diverse sensor data may further aggravate the challenges.

### BRIEF DESCRIPTION OF DRAWINGS

The following detailed description of the embodiments of the present disclosure will be better understood when read in conjunction with the appended drawings. The present disclosure is illustrated by way of example, and not limited by the accompanying figures, in which like references indicate similar elements.
FIG. 1A illustrates a block diagram of a signal processing system in accordance with an embodiment of the present disclosure;
FIGS. 1B-1L illustrate exemplary scenarios associated with the signal processing system in accordance with an embodiment of the present disclosure;
FIG. 2 illustrates a block diagram of a first processing circuit of the signal processing system in accordance with an embodiment of the present disclosure;
FIG. 3 illustrates a schematic diagram of a system on chip that implements the signal processing system in accordance with an embodiment of the present disclosure; and
FIGS. 4A and 4B, collectively, represent a flowchart that illustrates a signal processing method by the signal processing system in accordance with an embodiment of the present disclosure.

### DETAILED DESCRIPTION

The detailed description of the appended drawings is intended as a description of the embodiments of the present disclosure, and is not intended to represent the only form in which the present disclosure may be practiced. It is to be understood that the same or equivalent functions may be accomplished by different embodiments that are intended to be encompassed within the scope of the present disclosure.

### Overview:

Conventionally, a signal processing system, that is coupled to multiple sensors, includes multiple processing circuits with each processing circuit assigned to a coupled sensor to independently process sensor signals associated with the coupled sensor. In other words, the sensors may be tightly synchronized with the processing circuits. However, such an approach may lead to significant overhead and inefficient power and die area utilization, in the signal processing system. Additionally, resources (e.g., the multiple processing circuits) in such a signal processing system may be underutilized.

Other conventional signal processing systems may include a central processing circuit for processing the sensor signals associated with multiple sensors. Such signal processing systems may involve deterministic time scheduling of the multiple sensors to the central processing circuit. The deterministic time scheduling is performed during a design phase of the signal processing system. The deterministic time scheduling refers to a process where the central processing circuit is scheduled to process the sensor signals from each associated sensor in a predefined time order. In other words, the sensors may be loosely synchronized with the central processing circuit. However, during real-time processing of sensor signals, the time ordering of the availability of the sensor signals may be different from the predefined time ordering. Thus, such signal processing systems may be unable to support data driven scheduling of sensor processing. In other words, such signal processing systems may be unable to process the sensor signals based on the sensor signals being available. Additionally, in applications where the sensors may operate in various modes (for example, in automotive applications, where the sensors may operate in modes such as far range scan, near range scan, parking mode, or the like), such signal processing systems may fail to account for changes in the modes and latency of the sensors during the sensor signal processing.

Various embodiments of the present disclosure disclose various sensors and a signal processing system that facilitates resource sharing for signal processing of the sensors. The signal processing system may include processing circuits shared among the sensors. The signal processing system may further include orchestration circuitry coupled to the processing circuits. The orchestration circuitry may receive a first flow event. The first flow event may be associated with a first flow. The first flow may be associated with a first sensor, and may include a first plurality of independent tasklets. A tasklet may include a plurality of instructions associated with a set of signal processing operations related to the first sensor. Additionally, a tasklet may be the smallest unit that can be assigned to a processing circuit. In an example, the first flow event may be indicative of availability of sensor payload of the first sensor in the signal processing system. Further, the sensor payload may be associated with a first independent tasklet and a second independent tasklet of the first plurality of independent tasklets. A flow event may act as a trigger for facilitating activation of a corresponding flow (for example, one or more tasklets of the flow). Thus, the orchestration circuitry may activate, parallelly, the first independent tasklet and the second independent tasklet based on the first flow event.

The activation of the first independent tasklet and the second independent tasklet may include identification of the first independent tasklet and the second independent tasklet based on the first flow event and indication of execution of the first independent tasklet and the second independent tasklet. Based on the activation of the first independent tasklet and the second independent tasklet, the orchestration circuitry may determine a set of processing circuits from the processing circuits associated with the signal processing system. The orchestration circuitry may further execute, parallelly, the first independent tasklet and the second independent tasklet on the determined set of processing circuits. The sensor payload of the first sensor may thus be processed using the set of processing circuits.

The orchestration circuitry may receive a second flow event indicative of availability of sensor payload of a second sensor in the signal processing system. Further, the sensor payload may be associated with a third independent tasklet and a fourth independent tasklet of a second flow. In such a scenario, if the same set of processing circuits is available, the orchestration circuitry may further execute, parallelly, the third independent tasklet and the fourth independent tasklet on the determined set of processing circuits. The sensor payload of the second sensor may thus be processed using the same set of processing circuits that processed the sensor payload of the first sensor. The resources (e.g., the processing circuits) are thus shared among the sensors.

In contrast to conventional solutions, instead of a set of processing circuits being exclusively assigned to a particular sensor during a design phase of the signal processing system, the signal processing system of the present disclosure may facilitate sharing of resources (e.g., the processing circuits) among the multiple sensors for sensor signal processing. The resource sharing functionality may eliminate a need for exclusive assignment of a set of processing circuits for a sensor. As a result, the signal processing system may facilitate scaling a number of sensors associated therewith without a need to correspondingly increase the number of the processing circuits. Additionally, the required set of processing circuits may be utilized to execute the flow associated with a sensor based on the reception of the trigger (e.g., the corresponding flow event) in real time. In other words, the set of processing circuits may be assigned to the signal processing associated with a sensor in real time. Thus, the signal processing system of the present disclosure may support data driven scheduling of sensor processing. Further, the signal processing may remain unaffected irrespective of the change in mode of operation of the set of sensors during the signal processing as the flows associated with the set of sensors are scheduled in real time. In other words, the signal processing system of the present disclosure may support non-deterministic time scheduling.

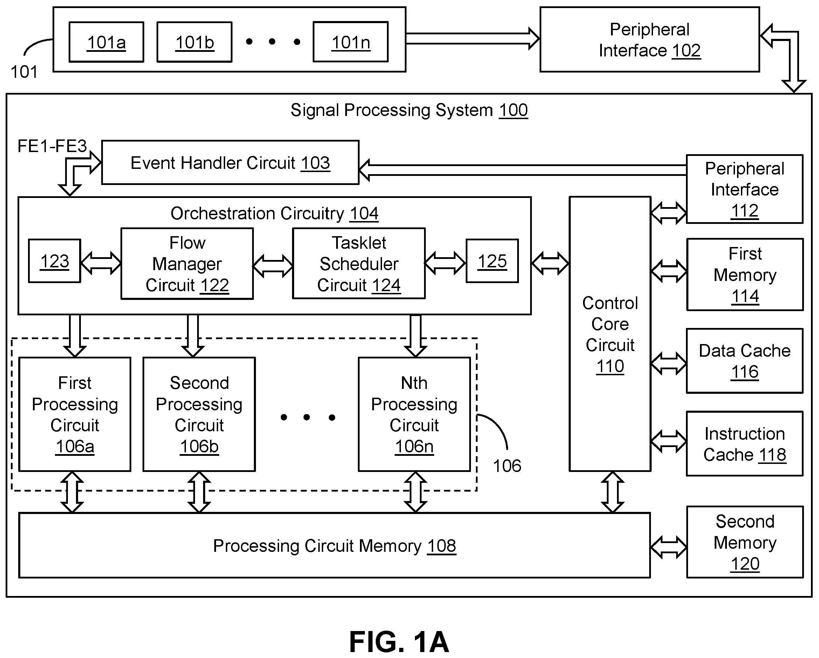

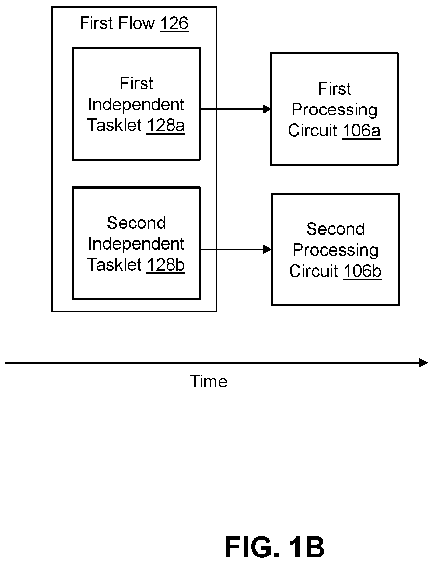

FIG. 1A illustrates a block diagram of a signal processing system 100 in accordance with an embodiment of the present disclosure. FIGS. 1B-1L illustrate exemplary scenarios associated with the signal processing system 100 in accordance with an embodiment of the present disclosure. FIG. 1A is explained in conjunction with FIGS. 1B-1L.

The signal processing system 100 may be a part of or may correspond to, an integrated circuit, a system on chip (SoC), a microcontroller unit, an electronic control unit, or the like. The signal processing system 100 may be implemented in various applications such as Radio Detection and Ranging (RADAR) for advanced driver assistance systems, autonomous vehicles, or surveillance. In some scenarios, RADAR may involve transmission of modulated radio frequency (RF) signals, reception of RF signals reflected from surrounding objects, and extraction of data (for example, range, velocity, and angular information) via at least one of Range Fast Fourier Transform (FFT), Doppler FFT, Beam FFT, peak detection, angle-of-arrival estimation, sorting operation, histogram operation, vector math operation, window acceleration, or the like. A process that involves the extraction of the data may be referred to as RADAR signal processing. For the sake of ongoing discussion, it is assumed that the signal processing system 100 may be implemented for the RADAR signal processing.

The signal processing system 100 may be coupled to a plurality of sensors 101. The plurality of sensors 101 may include a first sensor 101a, a second sensor 101b, ..., and an nth sensor 101n. Further, the signal processing system 100 may facilitate processing of a plurality of sensing signals associated with each sensor of the plurality of sensors 101. Each sensor of the plurality of sensors 101 may include suitable circuitry that may be configured to perform one or more operations. For example, each sensor may be configured to detect a physical event, convert the detected physical event to a sensing signal (e.g., an analog signal or a digital signal), and provide the sensing signal to a peripheral interface 102. In some examples, the sensing signal may include a plurality of chirps, where each chirp may correspond to a single frequency sweep in the sensing signal. Examples of the plurality of sensors 101 may include frequency-modulated continuous wave (FMCW) sensors, front RADAR sensors, rear RADAR sensors, corner RADAR sensors, surround RADAR sensors, imaging RADAR sensors, inertial sensors, temperature sensors, or the like.

The peripheral interface 102 may include suitable circuitry that may be configured to perform one or more operations. For example, the peripheral interface 102 may be configured to communicatively couple the signal processing system 100 to the plurality of sensors 101. Examples of the peripheral interface 102 may include a serial peripheral interface (SPI), a Universal Asynchronous Receiver/Transmitter (UART), General-Purpose Input/Output (GPIO), an Ethernet (ENET) media access control (MAC), a controller area network, a peripheral component interconnect express, or the like.

The peripheral interface 102 may be configured to receive a set of sensing signals from a set of sensors of the plurality of sensors 101 at one time instance. The peripheral interface 102 may be further configured to process each sensing signal and extract sensor payload from the corresponding sensor signal. The extracted sensor payload may include a sensor dataset. In an example, the sensor dataset may correspond to a chirp dataset of the corresponding sensing signal. The peripheral interface 102 may be further configured to store the extracted sensor payload in the signal processing system 100. Further, the peripheral interface 102 may be configured to send a set of payload messages to the signal processing system 100 indicating that the extracted sensor payload for the set of sensors is stored in the signal processing system 100.

During a design phase of the signal processing system 100, a procedure for the RADAR signal processing may be partitioned into a plurality of flows. A set of flows may be associated with signal processing of one sensor. In some embodiments, the flows may be independent of each other. In further embodiments, at least one flow may be dependent on one or more remaining flows of the plurality of flows. Further, each flow may include a plurality of tasklets. A tasklet may include a plurality of instructions associated with an operation for the RADAR signal processing. In an example, a tasklet may be associated with a range FFT operation for a chirp of the sensor payload. In some embodiments, the tasklet may further include a plurality of instruction threads. An instruction thread may include a set of instructions and may define a parallel execution path for the set of instructions. An instruction thread may be associated with a sub-operation of the corresponding operation. In some embodiments, a set of instructions may correspond to control instructions such as conditional loops (for example, if loop, if-else loop, while loop, or the like), branches, end-of-program instructions, AND conditions, OR conditions, or the like.

In some embodiments, each flow may include a plurality of independent tasklets and a plurality of dependent tasklets. Each independent tasklet may be independent of any data dependency on the remaining tasklets of the corresponding flow. Each dependent tasklet may have data dependency on one or more remaining tasklets of the corresponding flow. Further, each flow may indicate an execution order of the plurality of independent tasklets and the plurality of dependent tasklets associated therewith. Each flow may be further indicative of an activation condition or a skip condition for a set of tasklets associated therewith.

The signal processing system 100 may facilitate resource sharing for the RADAR signal processing. Additionally, the signal processing system 100 may involve real-time assignment of resources for the RADAR signal processing associated with the set of sensors. Furthermore, the signal processing system 100 may facilitate parallel execution of independent flows and parallel execution of independent tasklets.

The signal processing system 100 may include an event handler circuit 103, orchestration circuitry 104, a plurality of processing circuits 106, a processing circuit memory 108, a control core circuit 110, a peripheral interface 112, a first memory 114, a data cache 116, an instruction cache 118, and a second memory 120. The plurality of processing circuits 106 may include a first processing circuit 106a, a second processing circuit 106b, ..., and an nth processing circuit 106n. In some embodiments, the orchestration circuitry 104 may include a flow manager circuit 122, a flow memory 123, a tasklet scheduler circuit 124, and a tasklet memory 125. It will be apparent to a person skilled in the art that the signal processing system 100 may include additional components to facilitate various operations of the signal processing system 100.

### Event handler circuit 103:

The event handler circuit 103 may be coupled to the orchestration circuitry 104. The event handler circuit 103 may include suitable circuitry (e.g., one or more data interfaces, one or more processors, one or more logic circuits, one or more data storage structures, or a combination thereof) that may be configured to perform one or more operations. For example, the event handler circuit 103 may be configured to receive the set of payload messages from the peripheral interface 102. The set of payload messages may indicate that the sensor payload for the set of sensors is available in the processing circuit memory 108. In other words, the peripheral interface 102 may be configured to store the sensor payload for the set of sensors in the processing circuit memory 108 and send the set of payload messages to the event handler circuit 103 to indicate the sensor payload storage. The event handler circuit 103 may be further configured to generate a set of flow events based on the reception of the set of payload messages. A flow event may correspond to a trigger for a corresponding flow of the plurality of flows. A flow event may indicate metadata such as timestamp or sensor identifier. In some embodiments, the flow event may include one or more tasklet events. Each tasklet event may act as a trigger for a corresponding tasklet. Further, each tasklet event may indicate the availability of corresponding sensor data of the sensor payload along with the associated sensor identifier and timestamp. In an example, a tasklet event may indicate availability of corresponding chirp data of the chirp dataset. In some embodiments, the tasklet event may correspond to a data structure that comprises a plurality of fields. In an example, a first field of the plurality of fields may indicate the associated sensor identifier and a second field plurality of fields may indicate the timestamp. As the flow event may include one or more tasklet events, the flow event may include multiple data structures, each comprising fields to indicate sensor identifiers and timestamps. The event handler circuit 103 may be further configured to provide the generated set of flow events to the orchestration circuitry 104.

For the sake of ongoing discussion, it is assumed that the event handler circuit 103 may generate and provide a first flow event (denoted as FE1 in FIG. 1A) of a plurality of flow events to the orchestration circuitry 104. In one example, the first flow event FE1 may be associated with a first flow. The first flow may include a first plurality of independent tasklets (e.g., independent of any data dependency from the remaining tasklets). In further embodiments, the event handler circuit 103 may further generate and provide a second flow event (denoted as FE2 in FIG. 1A) of the plurality of flow events to the orchestration circuitry 104. In further additional embodiments, the event handler circuit 103 may further generate and provide a third flow event (denoted as FE3 in FIG. 1A) of the plurality of flow events to the orchestration circuitry 104. Thus, the set of flow events may include the first flow event FE1, the second flow event FE2, and the third flow event FE3.

### Orchestration circuitry 104:

The orchestration circuitry 104 may be coupled to the event handler circuit 103, the plurality of processing circuits 106, and the control core circuit 110. The orchestration circuitry 104 may include suitable circuitry (e.g., one or more data interfaces, one or more processors, one or more logic circuits, one or more data storage structures, or a combination thereof) that may be configured to perform one or more operations. For example, the orchestration circuitry 104 may be configured to receive the first flow event FE1 associated with the first flow from the event handler circuit 103. The first flow may be associated with the first sensor 101a, and may include the first plurality of independent tasklets. The first flow event FE1 may include a first independent tasklet event and a second independent tasklet event. The first independent tasklet event may be indicative of the availability of first sensor data associated with the first sensor 101a in the processing circuit memory 108. Further, the second independent tasklet event may be indicative of the availability of second sensor data associated with the first sensor 101a in the processing circuit memory 108.

The orchestration circuitry 104 may be further configured to activate, parallelly, the first independent tasklet and the second independent tasklet based on the first flow event FE1. The activation of the first independent tasklet and the second independent tasklet may include identification of the first independent tasklet and the second independent tasklet based on the first independent tasklet event and a second independent tasklet event, respectively. The activation of the first independent tasklet and the second independent tasklet may further include an indication of the execution of the first independent tasklet and the second independent tasklet. Further, the orchestration circuitry 104 may be configured to determine a first set of processing circuits of the plurality of processing circuits 106 based on the activation of the first independent tasklet and the second independent tasklet. The first set of processing circuits may be determined based on an availability status of each processing circuit of the plurality of processing circuits 106. The availability status may be one of available or unavailable. In some embodiments, the orchestration circuitry 104 may be configured to receive the availability status of each processing circuit of the plurality of processing circuits 106, from the corresponding processing circuit. In an example, the availability status may be received by way of one or more interfaces that couple the orchestration circuitry 104 and the plurality of processing circuits 106. The orchestration circuitry 104 may be further configured to execute, parallelly, the first independent tasklet and the second independent tasklet, on the first set of processing circuits. The first independent tasklet may be executed based on the first sensor data and the second independent tasklet may be executed based on the second sensor data.

Referring to FIG. 1B, the first set of processing circuits may include the first processing circuit 106a and the second processing circuit 106b. Further, the first flow (hereinafter referred to as the "first flow 126") is shown to include the first independent tasklet (hereinafter referred to as the "first independent tasklet 128a") and the second independent tasklet (hereinafter referred to as the "second independent tasklet 128b"). The first independent tasklet 128a may be executed on the first processing circuit 106a and the second independent tasklet 128b may be executed on the second processing circuit 106b. The execution of the first independent tasklet 128a and the second independent tasklet 128b may be based on the corresponding sensor payload being available in the processing circuit memory 108. FIG. 1B illustrates time in the X-axis. As shown in FIG. 1B, the first independent tasklet 128a and the second independent tasklet 128b are parallelly executed.

Referring back to FIG. 1A, the orchestration circuitry 104 may be further configured to receive the second flow event FE2 from the event handler circuit 103. The second flow event FE2 may be associated with a second flow of the plurality of flows, and the second flow may include a second plurality of independent tasklets. The orchestration circuitry 104 may be further configured to activate, parallelly, a third independent tasklet and a fourth independent tasklet of the second plurality of independent tasklets based on the second flow event FE2. Further, the orchestration circuitry 104 may be configured to determine a second set of processing circuits of the plurality of processing circuits 106 based on the activation of the third independent tasklet and the fourth independent tasklet. The second set of processing circuits may be determined based on the availability status of each processing circuit of the plurality of processing circuits 106. The orchestration circuitry 104 may be further configured to execute, parallelly, the third independent tasklet and the fourth independent tasklet, on the second set of processing circuits.

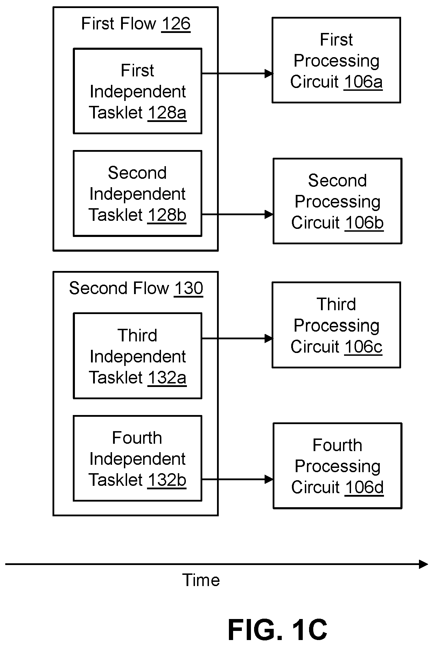

Referring to FIG. 1C, the second set of processing circuits may include the third processing circuit 106c and the fourth processing circuit 106d. Further, the second flow (hereinafter referred to as the "second flow 130") is shown to include the third independent tasklet (hereinafter referred to as the "third independent tasklet 132a") and the fourth independent tasklet (hereinafter referred to as the "fourth independent tasklet 132b"). The third independent tasklet 132a may be executed on the third processing circuit 106c and the fourth independent tasklet 132b may be executed on the fourth processing circuit 106d. FIG. 1C illustrates time in X-axis. As shown in FIG. 1C, the first independent tasklet 128a, the second independent tasklet 128b, the third independent tasklet 132a, and the fourth independent tasklet 132b may be activated and executed, parallelly.

Referring back to FIG. 1A, in some embodiments, the second flow 130 may be associated with the first sensor 101a. Thus, the signal processing system 100 may facilitate the distribution of processing associated with one sensor to multiple processing circuits (e.g., the first and second sets of processing circuits). In such embodiments, the second flow event FE2 may indicate the availability of the sensor payload associated with the first sensor 101a in the processing circuit memory 108.

In further embodiments, the second flow 130 may be associated with the second sensor 101b. In such embodiments, the second flow event FE2 may indicate the availability of the sensor payload associated with the second sensor 101b in the processing circuit memory 108.

The first flow 126 may further include a first plurality of dependent tasklets. The first plurality of independent tasklets and the first plurality of dependent tasklets may constitute the plurality of tasklets of the first flow 126. Each dependent tasklet may have data dependency on a set of remaining tasklets associated with the signal processing system 100. The first flow event FE1 may further include a dependent tasklet event. The dependent tasklet event may be indicative of the availability of third sensor data associated with the first sensor 101a in the processing circuit memory 108. The orchestration circuitry 104 may be further configured to activate, sequentially, a first dependent tasklet and a second dependent tasklet, of the first plurality of dependent tasklets based on the first flow event FE1. The first dependent tasklet may be activated based on the dependent tasklet event. Further, the second dependent tasklet may be activated based on the activation of the first dependent tasklet. The activation of the first dependent tasklet may include identification of the first dependent tasklet based on the dependent tasklet event and indication of execution of the first dependent tasklet. Further, the activation of the second dependent tasklet may include identification of the second dependent tasklet based on the activation of the first dependent tasklet and indication of execution of the second dependent tasklet.

The orchestration circuitry 104 may be further configured to determine a third set of processing circuits of the plurality of processing circuits 106 based on the activation of the first dependent tasklet and the second dependent tasklet. The third set of processing circuits may be determined based on the availability status of each processing circuit of the plurality of processing circuits 106. The orchestration circuitry 104 may be further configured to execute, sequentially, the first dependent tasklet and the second dependent tasklet on the third set of processing circuits. The second dependent tasklet may be executed upon completion of the execution of the first dependent tasklet.

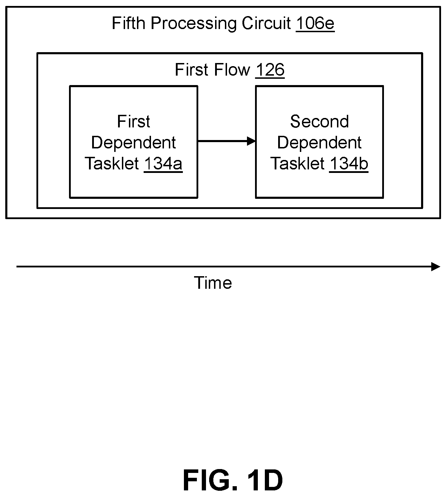

Referring to FIG. 1D, in some embodiments, the third set of processing circuits may include the fifth processing circuit 106e. The first flow 126 is shown to include, the first dependent tasklet (hereinafter referred to as the "first dependent tasklet 134a") and the second dependent tasklet (hereinafter referred to as the "second dependent tasklet 134b"). In such embodiments, the first dependent tasklet 134a and the second dependent tasklet 134b may be sequentially executed on the fifth processing circuit 106e. FIG. 1D illustrates time in the X-axis. As shown in FIG. 1D, the second dependent tasklet 134b may be executed on the fifth processing circuit 106e after the completion of the execution of the first dependent tasklet 134a.

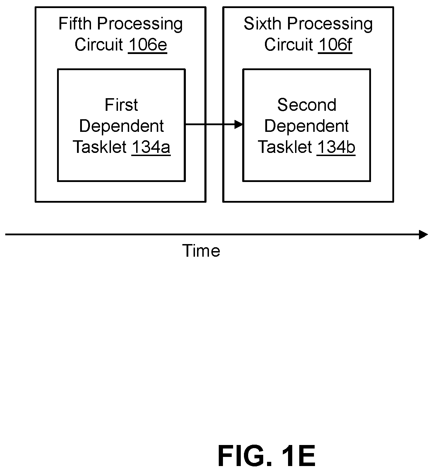

Referring to FIG. 1E, in some embodiments, the third set of processing circuits may include the fifth processing circuit 106e and the sixth processing circuit 106f. In such embodiments, the first dependent tasklet 134a and the second dependent tasklet 134b may be sequentially executed on the fifth processing circuit 106e and the sixth processing circuit 106f, respectively. FIG. 1E illustrates time in X-axis. As shown in FIG. 1E, the second dependent tasklet 134b may be executed on the sixth processing circuit 106f after the completion of the execution of the first dependent tasklet 134a on the fifth processing circuit 106e.

Referring back to FIG. 1A, the orchestration circuitry 104 may be further configured to activate, sequentially, a third dependent tasklet and a fourth dependent tasklet of a third flow of the plurality of flows based on the execution of the second dependent tasklet 134b. Further, the orchestration circuitry 104 may be configured to determine a fourth set of processing circuits of the plurality of processing circuits 106 based on the activation of the third dependent tasklet and the fourth dependent tasklet. The fourth set of processing circuits may be determined based on the availability status of each processing circuit of the plurality of processing circuits 106. The orchestration circuitry 104 may be configured to execute, sequentially, the third dependent tasklet and the fourth dependent tasklet on the fourth set of processing circuits.

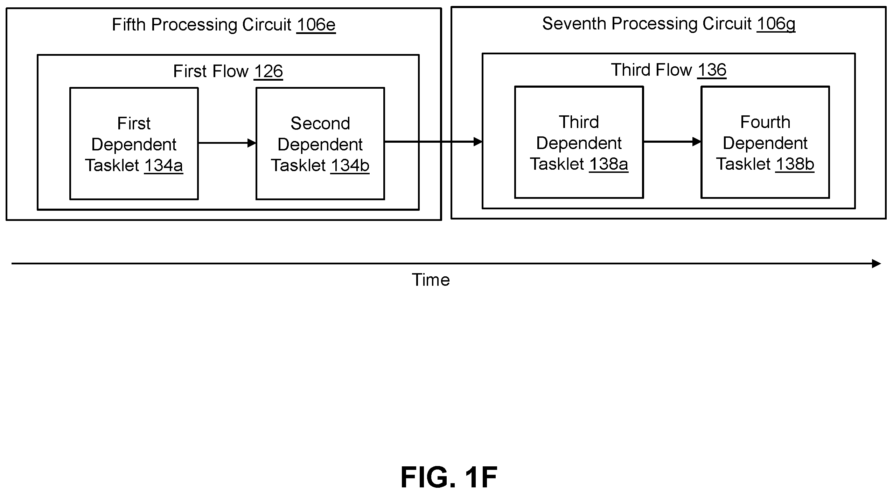

Referring to FIG. 1F, the fourth set of processing circuits may include the seventh processing circuit 106g. The third flow (hereinafter referred to as the "third flow 136") is shown to include, the third dependent tasklet (hereinafter referred to as the "third dependent tasklet 138a") and the fourth dependent tasklet (hereinafter referred to as the "fourth dependent tasklet 138b"). The third dependent tasklet 138a and the fourth dependent tasklet 138b may be executed on the seventh processing circuit 106g. FIG. 1F illustrates time in X-axis. As shown in FIG. 1F, the third dependent tasklet 138a may be executed on the seventh processing circuit 106g after the completion of the execution of the second dependent tasklet 134b. The completion of the execution of the second dependent tasklet 134b may act as a trigger for activation of the third dependent tasklet 138a. Further, the fourth dependent tasklet 138b may be executed on the seventh processing circuit 106g after the completion of the execution of the third dependent tasklet 138a. Thus, the activation of the third flow 136 may be dependent on the first flow 126.

Referring back to FIG. 1A, the orchestration circuitry 104 may be further configured to activate, parallelly, a fifth independent tasklet and a sixth independent tasklet of the first flow 126 based on the execution of the second dependent tasklet 134b. Further, the orchestration circuitry 104 may be configured to determine a fifth set of processing circuits of the plurality of processing circuits 106 based on the activation of the fifth independent tasklet and the sixth independent tasklet. The fifth set of processing circuits may be determined based on the availability status of each processing circuit of the plurality of processing circuits 106. The orchestration circuitry 104 may be further configured to execute, parallelly, the fifth independent tasklet and the sixth independent tasklet on the fifth set of processing circuits.

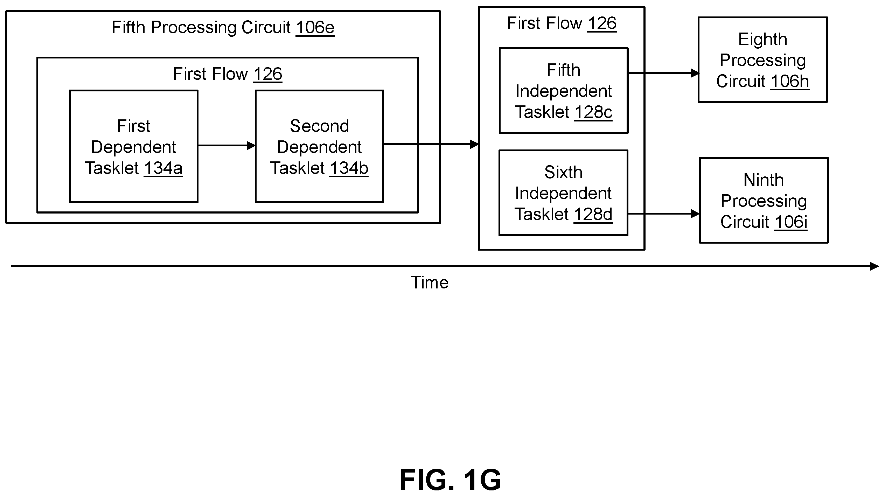

Referring to FIG. 1G, the fifth set of processing circuits may include the eighth processing circuit 106h and the ninth processing circuit 106i. The first flow 126 is shown to include the fifth independent tasklet (hereinafter referred to as the "fifth independent tasklet 128c") and the sixth independent tasklet (hereinafter referred to as the "sixth independent tasklet 128d"). The fifth independent tasklet 128c and the sixth independent tasklet 128d may be executed on the eighth processing circuit 106h and the ninth processing circuit 106i, respectively. FIG. 1G illustrates time in the X-axis. As shown in FIG. 1G, the fifth independent tasklet 128c and the sixth independent tasklet 128d may be executed on the eighth processing circuit 106h and the ninth processing circuit 106i, after the completion of the execution of the second dependent tasklet 134b. Additionally, the fifth independent tasklet 128c and the sixth independent tasklet 128d may be executed, parallelly.

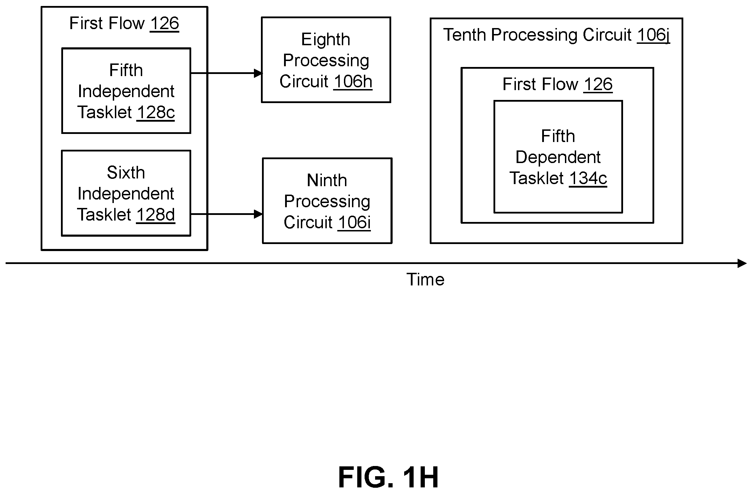

Referring back to FIG. 1A, the orchestration circuitry 104 may be further configured to activate a fifth dependent tasklet of the first plurality of dependent tasklets based on the execution of the fifth independent tasklet 128c and the sixth independent tasklet 128d. Further, the orchestration circuitry 104 may be configured to determine a tenth processing circuit (shown in FIG. 1H) of the plurality of processing circuits 106 based on the activation of the fifth dependent tasklet. The orchestration circuitry 104 may be further configured to execute, the fifth dependent tasklet on the tenth processing circuit.

Referring to FIG. 1H, the first flow 126 is shown to include, the fifth dependent tasklet (hereinafter referred to as the "fifth dependent tasklet 134c") The fifth dependent tasklet 134c may be executed on the tenth processing circuit 106j. FIG. 1H illustrates time in X-axis. As shown in FIG. 1H, the fifth dependent tasklet 134c may be executed on the tenth processing circuit 106j after the completion of the execution of the fifth independent tasklet 128c and the sixth independent tasklet 128d.

Referring back to FIG. 1A, in some embodiments, the orchestration circuitry 104 may be further configured to activate, parallelly, a seventh independent tasklet and an eighth independent tasklet of the first plurality of independent tasklets based on the first flow event FE1. Further, orchestration circuitry 104 may be configured to determine a sixth set of processing circuits of the plurality of processing circuits 106 based on the activation of the seventh independent tasklet and the eighth independent tasklet. The sixth set of processing circuits may be determined based on the availability status of each processing circuit of the plurality of processing circuits 106. Furthermore, the orchestration circuitry 104 may be configured to arbitrate execution of the seventh independent tasklet and the eighth independent tasklet on the sixth set of processing circuits. The orchestration circuitry 104 may arbitrate the execution of the seventh independent tasklet and the eighth independent tasklet on the sixth set of processing circuits as the sixth set of processing circuits available may be insufficient for parallel execution of the seventh independent tasklet and the eighth independent tasklet.

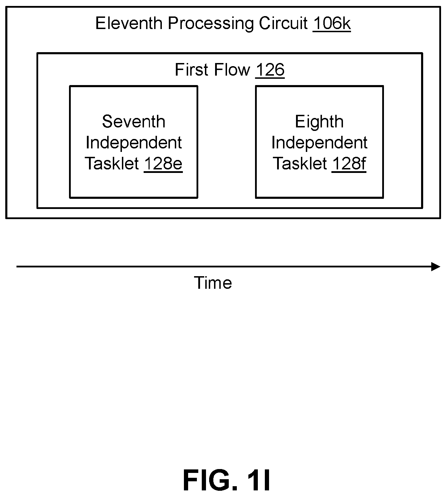

Referring to FIG. 1I, the arbitration of the execution of the seventh independent tasklet (hereinafter referred to as the "seventh independent tasklet 128e") and the eighth independent tasklet (hereinafter referred to as the "eighth independent tasklet 128f") on the sixth set of processing circuits may be based on a priority associated therewith. In an example, the sixth set of processing circuits may include the eleventh processing circuit 106k. Further, the seventh independent tasklet 128e may have a higher priority in comparison to the eighth independent tasklet 128f. In such an example, the seventh independent tasklet 128e may be executed on the eleventh processing circuit 106k and the eighth independent tasklet 128f may be executed on the eleventh processing circuit 106k after completion of the execution of the seventh independent tasklet 128e.

Referring back to FIG. 1A, in some embodiments, the orchestration circuitry 104 may be configured to receive the third flow event FE3 associated with the third flow 136 of the plurality of flows. The third flow 136 may be associated with the second sensor 101b. The third flow 136 may include a third plurality of independent tasklets. The orchestration circuitry 104 may be further configured to activate, parallelly, a ninth independent tasklet and a tenth independent tasklet, of the third plurality of independent tasklets based on the third flow event FE3. The orchestration circuitry 104 may be further configured to determine the first set of processing circuits based on the activation of the ninth independent tasklet and the tenth independent tasklet. Further, the orchestration circuitry 104 may be configured to execute, parallelly, the ninth independent tasklet and the tenth independent tasklet, on the first set of processing circuits. Thus, the first set of processing circuits is utilized for the RADAR signal processing of the first sensor 101a and the second sensor 101b. In other words, the resources (e.g., the first set of processing circuits) are shared among the first and second sensors 101a and 101b.

In some examples, the third flow event FE3 may be received after the execution of the first independent tasklet 128a and the second independent tasklet 128b on the first set of processing circuits. Thus, the orchestration circuitry 104 may determine the first set of processing circuits that is available for the execution of the ninth independent tasklet and the tenth independent tasklet.

In some additional examples, the first flow event FE1 may be received after the execution of the ninth independent tasklet and the tenth independent tasklet.

In some embodiments, the orchestration circuitry 104 may include the flow manager circuit 122 and the tasklet scheduler circuit 124.

### Flow manager circuit 122:

The flow manager circuit 122 may include suitable circuitry (e.g., one or more data interfaces, one or more processors, one or more logic circuits, one or more data storage structures, or a combination thereof) that may be configured to perform one or more operations. For example, the flow manager circuit 122 may be configured to maintain, in the flow memory 123, a list of the plurality of flows and the plurality of tasklets associated with each flow. The flow manager circuit 122 may be further configured to receive the first flow event FE1. The flow manager circuit 122 may be further configured to activate the first independent tasklet 128a and the second independent tasklet 128b based on the first flow event FE1. To activate the first independent tasklet 128a and the second independent tasklet 128b, the flow manager circuit 122 may be configured to identify the first flow 126 from the list of the plurality of flows based on the received first flow event FE1. Further, the flow manager circuit 122 may be configured to identify the first independent tasklet 128a and the second independent tasklet 128b associated with the first flow 126 based on the first independent tasklet event and the second independent tasklet event of the first flow event FE1, respectively. To activate the first independent tasklet 128a and the second independent tasklet 128b, the flow manager circuit 122 may be further configured to indicate the tasklet scheduler circuit 124 to parallelly execute the identified first independent tasklet 128a and the identified second independent tasklet 128b.

To activate the first dependent tasklet 134a and the second dependent tasklet 134b, the flow manager circuit 122 may be further configured to identify the first dependent tasklet 134a associated with the first flow 126 from the list based on the dependent tasklet event. The flow manager circuit 122 may be configured to identify the second dependent tasklet 134b from the list based on the identification of the first dependent tasklet. Further, the flow manager circuit 122 may be configured to indicate the tasklet scheduler circuit 124 to sequentially execute the first dependent tasklet 134a and the second dependent tasklet 134b.

The flow manager circuit 122 may activate each independent tasklet described in the present disclosure similarly to the facilitation of the activation of the first independent tasklet 128a and the second independent tasklet 128b. Further, the flow manager circuit 122 may activate each dependent tasklet described in the present disclosure similarly to the facilitation of the activation of the first dependent tasklet 134a or the second dependent tasklet 134b.

In some embodiments, the flow manager circuit 122 may be further configured to repetitively activate a set of independent tasklets and a set of dependent tasklets associated with the first flow 126.

In some embodiments, the flow manager circuit 122 may be further configured to receive the execution status of each independent tasklet and each dependent tasklet. The execution status may correspond to one of execution in progress, execution completed, or execution failed. Further, the flow manager circuit 122 may activate one or more independent tasklets and dependent tasklets based on the received execution status.

### Flow memory 123:

The flow memory 123 may be coupled to the flow manager circuit 122. The flow memory 123 may include suitable circuitry that may be configured to perform one or more operations. For example, the flow memory 123 may be configured to store the list of the plurality of flows. The list of the plurality of flows may indicate the plurality of tasklets associated with each flow of the plurality of flows and a sequence associated therewith. Examples of the flow memory 123 may include a random access memory (RAM), a read only memory (ROM), or the like.

### Tasklet scheduler circuit 124:

The tasklet scheduler circuit 124 may be coupled to the flow manager circuit 122. The tasklet scheduler circuit 124 may include suitable circuitry (e.g., one or more data interfaces, one or more processors, one or more logic circuits, one or more data storage structures, or a combination thereof) that may be configured to perform one or more operations. For example, the tasklet scheduler circuit 124 may be configured to receive, from the flow manager circuit 122, the indication to parallelly execute the first independent tasklet 128a and the second independent tasklet 128b. Further, the tasklet scheduler circuit 124 may be configured to determine the first set of processing circuits from the plurality of processing circuits 106 based on the received indication. Furthermore, the tasklet scheduler circuit 124 may be configured to execute the first independent tasklet 128a and the second independent tasklet 128b on the first set of processing circuits.

The tasklet scheduler circuit 124 may consider the complexity associated with each of the first independent tasklet 128a and the second independent tasklet 128b and the availability of the plurality of processing circuits 106 to determine the first set of processing circuits. A complexity associated with a tasklet may refer to at least one of a time complexity associated with the execution of the corresponding tasklet or memory requirements for the execution of the corresponding tasklet. In some embodiments, the tasklet scheduler circuit 124 may further consider the processing capability of the plurality of processing circuits 106 to determine the first set of processing circuits.

To execute the first independent tasklet 128a and the second independent tasklet 128b, the tasklet scheduler circuit 124 may be configured to send, to the first set of processing circuits, a reference address for the plurality of instructions associated with each of the first independent tasklet 128a and the second independent tasklet 128b. The tasklet scheduler circuit 124 may send the reference address for the plurality of instructions associated with the first independent tasklet 128a to the first processing circuit 106a. Parallelly, the tasklet scheduler circuit 124 may send the reference address for the plurality of instructions associated with the second independent tasklet 128b to the second processing circuit 106b. The reference address may be associated with the tasklet memory 125. Thus, the execution of the first independent tasklet 128a and the second independent tasklet 128b on the first set of processing circuits by the orchestration circuitry 104 may refer to the orchestration circuitry 104 causing the execution of the first independent tasklet 128a and the second independent tasklet 128b on the first set of processing circuits by sending the corresponding reference addresses.

The tasklet scheduler circuit 124 may execute each independent tasklet and dependent tasklet described in the foregoing description similarly to the execution of the first independent tasklet 128a and the second independent tasklet 128b.

The tasklet scheduler circuit 124 may be further configured to arbitrate the execution of the seventh independent tasklet 128e and the eighth independent tasklet 128f based on the unavailability of the plurality of processing circuits 106 to parallelly execute the seventh independent tasklet 128e and the eighth independent tasklet 128f. To arbitrate the seventh independent tasklet 128e and the eighth independent tasklet 128f, the tasklet scheduler circuit 124 may be configured to sequentially send, to the eleventh processing circuit 106k, a reference address for each of the seventh independent tasklet 128e and the eighth independent tasklet 128f.

In some embodiments, the tasklet scheduler circuit 124 may be configured to maintain, in the tasklet memory 125, a whitelist of processing circuits and a blacklist of processing circuits based on the processing capability of the corresponding processing circuit. The whitelist of processing circuits may include processing circuits that may be preferred for the execution of corresponding mapped tasklets. Further, the blacklist of processing circuits may include processing circuits that may be prohibited for execution of corresponding mapped tasklets. In such embodiments, the determination of the set of processing circuits may be further based on the whitelist of processing circuits and the blacklist of processing circuits.

In some embodiments, the tasklet scheduler circuit 124 may be further configured to monitor the execution of each independent tasklet and each dependent tasklet. The tasklet scheduler circuit 124 may be further configured to report the execution status of each independent tasklet and each dependent tasklet to the flow manager circuit 122 based on the monitoring. The execution status may correspond to one of execution in progress, execution completed, or execution failed.

### Tasklet memory 125:

The tasklet memory 125 may be coupled to the tasklet scheduler circuit 124. The tasklet memory 125 may include suitable circuitry that may be configured to perform one or more operations. For example, the tasklet memory 125 may be configured to store the plurality of instructions associated with each tasklet of the plurality of tasklets. In other words, the tasklet memory 125 may store the plurality of flows. Thus, the tasklet memory 125 may be configured to store the first plurality of independent tasklets, the second plurality of independent tasklets, and the first plurality of dependent tasklets. Examples of the tasklet memory 125 may include a RAM, a ROM, or the like.

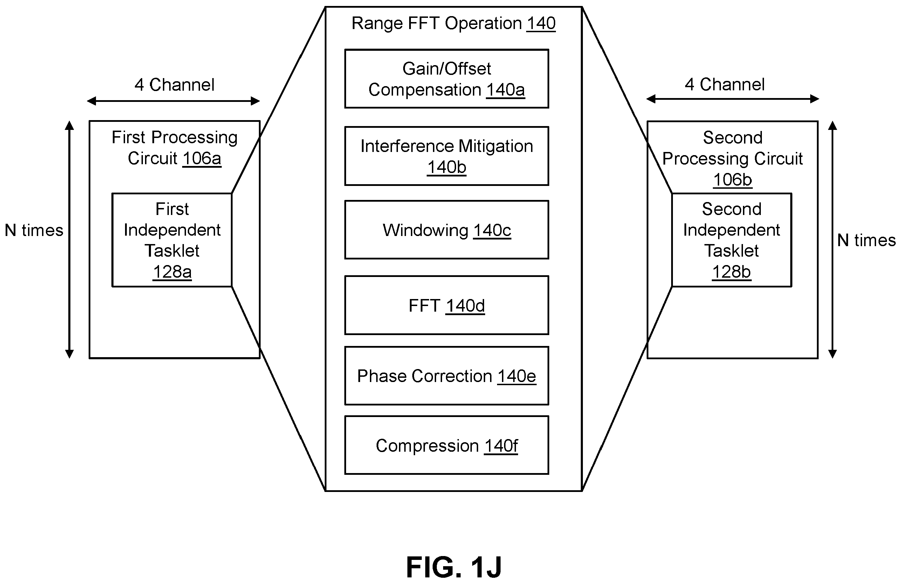

Referring to FIG. 1J, in an example, the first sensor 101a may correspond to an FMCW sensor. Thus, a plurality of channels may be associated with the first sensor 101a. As a result, a range FFT operation 140 may have to be performed for each chirp received from each channel. In other words, loop-over chirps may have to be performed. As each chirp may be independent of the other, one independent tasklet may be utilized to perform the FFT operation for each chirp of each channel. For the sake of brevity, it is assumed that the plurality of channels may include eight channels. Further, 'N' chirps are associated with each channel. Additionally, the Range FFT operation 140 may include gain/offset compensation 140a, interference mitigation 140b, windowing 140c, FFT 140d, phase correction 140e, and compression 140f. In such a scenario, one independent tasklet (for example, the first independent tasklet 128a) may be executed for each of the N×4 chirps on one processing circuit (for example, the first processing circuit 106a) and another independent tasklet (for example, the second independent tasklet 128b) may be executed for each of the N×4 chirps on a different processing circuit (for example the second processing circuit 106b), parallelly. In some additional alternate scenarios, N×8 independent tasklets may be parallelly executed on the first set of processing circuits. In some alternate scenarios, execution of N×8 independent tasklets may be arbitrated on the first set of processing circuits. In some alternate scenarios, one independent tasklet may be executed for each of the N×8 chirps. In other words, one independent tasklet may be repeatedly executed.

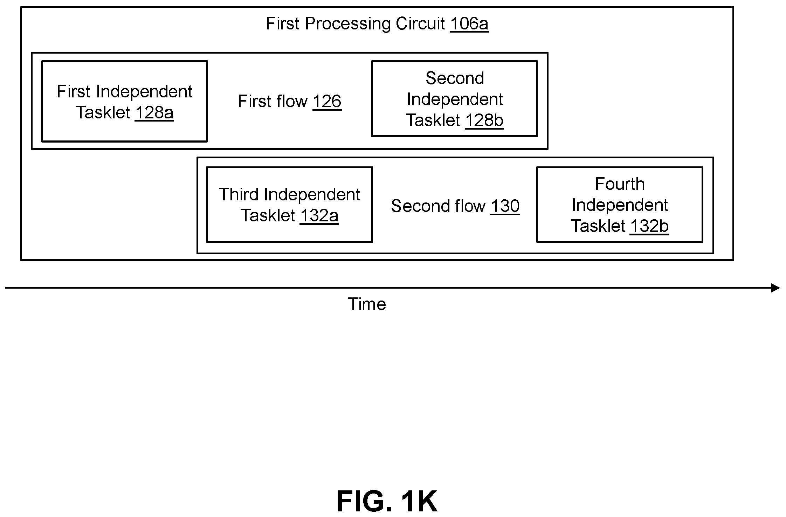

Referring to FIG. 1K, in some examples, the first flow 126 and the second flow 130 may be associated with the first sensor 101a. Further, each of the first independent tasklet 128a and the second independent tasklet 128b may be associated with a Range FFT operation, and each of the third independent tasklet 132a and the fourth independent tasklet 132b may be associated with a Doppler FFT operation. The orchestration circuitry 104 may be further configured to execute, sequentially, the first independent tasklet 128a and the second independent tasklet 128b, on the first processing circuit 106a. The first processing circuit 106a may be available for a time duration between the execution of the first independent tasklet 128a and the second independent tasklet 128b. Further, the orchestration circuitry 104 may execute the third independent tasklet 132a on the first processing circuit 106a during the time duration between the execution of the first independent tasklet 128a and the second independent tasklet 128b. Furthermore, the orchestration circuitry 104 may execute the fourth independent tasklet 132b on the first processing circuit 106a when the first processing circuit 106a is available after the execution of the second independent tasklet 128b. FIG. 1K illustrates time in the X-axis.

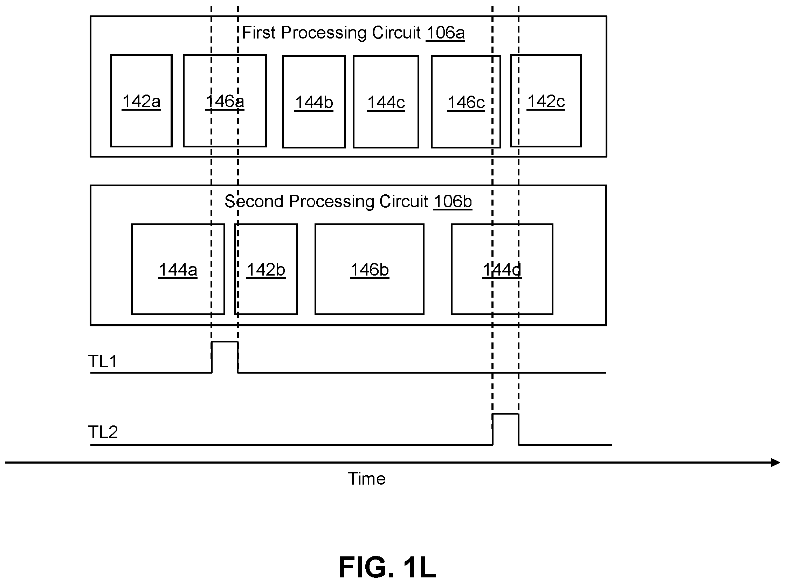

Referring to FIG. 1L, in some examples, the first flow 126, the second flow 130, and the third flow 136 may have to be executed on the first processing circuit 106a and the second processing circuit 106b. The first flow 126 may include a tasklet 142a, a tasklet 142b, and a tasklet 142c. Further, the second flow 130 may include a tasklet 144a, a tasklet 144b, a tasklet 144c, and a tasklet 144d. The third flow 136 may include a tasklet 146a, a tasklet 146b, and a tasklet 146c. The tasklet 142b and the tasklet 142c may be dependent tasklets. Further, the tasklet 142a, the tasklet 144a, the tasklet 144b, the tasklet 144c, the tasklet 144d, the tasklet 146a, the tasklet 146b, and the tasklet 146c may correspond to independent tasklets. In such a scenario, based on the processing capabilities of the first processing circuit 106a and the second processing circuit 106b, the orchestration circuitry 104 may execute the tasklet 142a on the first processing circuit 106a. Further, upon the completion of the execution of the tasklet 142a, the orchestration circuitry 104 may execute the tasklet 146a on the first processing circuit 106a. Simultaneously, the orchestration circuitry 104 may execute the tasklet 144a on the second processing circuit 106b. During the execution of the tasklet 146a of the third flow 136 and the tasklet 144a of the second flow 130, the orchestration circuitry 104 may receive a tasklet event TL1 that acts as a trigger for the tasklet 142b of the first flow 126. As the execution of the tasklet 144a is completed before the completion of the execution of the tasklet 146a, the orchestration circuitry 104 executes the tasklet 142b on the second processing circuit 106b upon the completion of the execution of the tasklet 144a.

The orchestration circuitry 104 may further execute the tasklet 144b and the tasklet 144c of the second flow 130, sequentially, on the first processing circuit 106a upon completion of the execution of the tasklet 146a of the third flow 136. Further, the orchestration circuitry 104 may execute the tasklet 146b on the second processing circuit 106b upon the completion of the execution of the tasklet 142b. The orchestration circuitry 104 may further execute the tasklet 146c on the first processing circuit 106a and the tasklet 144d on the second processing circuit 106b. During the execution of the tasklet 146c and the tasklet 144d, the orchestration circuitry 104 may receive a tasklet event TL2 that acts as a trigger for the tasklet 142c of the first flow 126. As the execution of the tasklet 146c is completed before the completion of the execution of the tasklet 144d, the orchestration circuitry 104 executes the tasklet 142c of the first flow 126 on the first processing circuit 106a upon the completion of the execution of the tasklet 146c of the third flow 136. FIG. 1L illustrates time in the X-axis.

### Plurality of processing circuits 106:

Referring back to FIG. 1A, each processing circuit of the plurality of processing circuits 106 may be coupled to the orchestration circuitry 104 and the processing circuit memory 108. Each processing circuit may include suitable circuitry (e.g., one or more data interfaces, one or more processors, one or more logic circuits, one or more data storage structures, or a combination thereof) that may be configured to perform one or more operations. For example, each processing circuit may be configured to receive the reference address for the plurality of instructions associated with a corresponding independent tasklet or a corresponding dependent tasklet described above. Further, each processing circuit may be configured to retrieve the corresponding plurality of instructions from the tasklet memory 125. Each processing circuit may be configured to process the corresponding retrieved plurality of instructions. In some examples, each processing circuit may be configured to fetch the corresponding sensor payload stored in the processing circuit memory 108. Further, each processing circuit may process the corresponding retrieved plurality of instructions based on the fetched sensor payload. Additionally, each processing circuit may be configured to generate RADAR data based on the processing of the plurality of instructions. Furthermore, each processing circuit of the first set of processing circuits may be configured to store the RADAR data in the processing circuit memory 108.

In some embodiments, each processing circuit of the plurality of processing circuits 106 may be further configured to report a status of the corresponding processing circuit to the tasklet scheduler circuit 124. A status of a processing circuit may correspond to one of an idle mode, a run mode, a breakpoint mode, or a waiting-for-trigger mode. An idle mode may correspond to a mode when the processing circuit is idle. A run mode may correspond to a mode when the processing circuit is processing a plurality of instructions. A breakpoint mode may correspond to a mode when the processing circuit has halted the processing of a plurality of instructions based on an intentional pause. A waiting-for-trigger mode may correspond to a mode when the processing circuit is waiting to receive a trigger to process a plurality of instructions.

In some embodiments, during the sequential execution of the first dependent tasklet 134a and the second dependent tasklet 134b as shown in FIG. 1E, the fifth processing circuit 106e may be configured to generate first data based on the execution of the first dependent tasklet 134a. Further, the fifth processing circuit 106e may be configured to store the first data in the processing circuit memory 108. Further, the sixth processing circuit 106f may be configured to retrieve the first data from the processing circuit memory 108. The execution of the second dependent tasklet 134b on the sixth processing circuit 106f may be based on the first data. In other words, the second dependent tasklet 134b may be dependent on the first data for the execution.

In some embodiments, the processing capability of each processing circuit of the plurality of processing circuits 106 may be the same. In such embodiments, the plurality of processing circuits 106 may be referred to as homogeneous processing circuits. Thus, any processing circuit of the plurality of processing circuits 106 may be utilized for the execution of any tasklet associated with the signal processing system 100. In some more embodiments, the processing capability of a set of processing circuits of the plurality of processing circuits 106 may be different from the remaining processing circuits of the plurality of processing circuits 106. In such embodiments, the plurality of processing circuits 106 may be referred to as heterogeneous processing circuits. The heterogeneous processing circuits may enable fine-grain scalability.

### Processing circuit memory 108:

The processing circuit memory 108 may be coupled to the plurality of processing circuits 106, the control core circuit 110, and the second memory 120. The processing circuit memory 108 may include suitable circuitry that may be configured to perform one or more operations. For example, the processing circuit memory 108 may be configured to facilitate storage of the sensor payload. Further, the processing circuit memory 108 may be configured to facilitate data transfer (for example, the first data, the RADAR data, or the like) between the plurality of processing circuits 106, the control core circuit 110, and the second memory 120. In some examples, the processing circuit memory 108 may correspond to level 2 (L2) RAM.

### Control core circuit 110:

The control core circuit 110 may be coupled to the orchestration circuitry 104, the processing circuit memory 108, the peripheral interface 112, the first memory 114, the data cache 116, and the instruction cache 118. The control core circuit 110 may include suitable circuitry (e.g., one or more data interfaces, one or more processors, one or more logic circuits, one or more data storage structures, or a combination thereof) that may be configured to perform one or more operations. For example, the control core circuit 110 may be configured to receive the execution status of each independent tasklet and each dependent tasklet, from the orchestration circuitry 104. In some embodiments, the control core circuit 110 may receive the status of each processing circuit of the plurality of processing circuits 106. The control core circuit 110 may generate a diagnostic report associated with the RADAR signal processing based on the received the execution status and the received status of each processing circuit.

In some embodiments, the control core circuit 110 may be further configured to manage a set of flows of the plurality of flows. In an example, the control core circuit 110 may be configured to execute a set of tasklets associated with the signal processing system 100 when the set of tasklets is associated with non-accelerated functions. In some more embodiments, the control core circuit 110 may be configured to interact with an SoC associated with the signal processing system 100 to facilitate a set of operations associated with RADAR signal processing.

In some embodiments, the control core circuit 110 may be configured to at least one of activate, modify, or suspend the execution of a set of flows of the plurality of flows.

### Peripheral interface 112:

The peripheral interface 112 may be coupled to the event handler circuit 103 and the control core circuit 110. The peripheral interface 112 may include suitable circuitry that may be configured to perform one or more operations. For example, the peripheral interface 112 may be configured to communicatively couple the signal processing system 100 to external devices or modules. In some examples, the peripheral interface 112 may be configured to facilitate the transfer of the set of payload messages to the event handler circuit 103. In some more examples, the peripheral interface 112 may be configured to couple the control core circuit 110 to a central processing unit (CPU) that is external to the signal processing system 100. Examples of the peripheral interface 112 may include an SPI, a UART, GPIO, a parallel interface, or the like.

### First memory 114:

The first memory 114 may be coupled to the control core circuit 110. The first memory 114 may include suitable circuitry that may be configured to perform one or more operations. The first memory 114 may be configured to facilitate storage of a set of control instructions and a set of control data to facilitate the one or more operations of the control core circuit 110.

In some embodiments, the first memory 114 may be further configured to facilitate storage of dataset that may be required for the execution of the set of tasklets. The dataset may include a set of coefficient values, a set of look-up tables, or the like. An example of the first memory 114 may be a tightly coupled memory (TCM).

### Data cache 116:

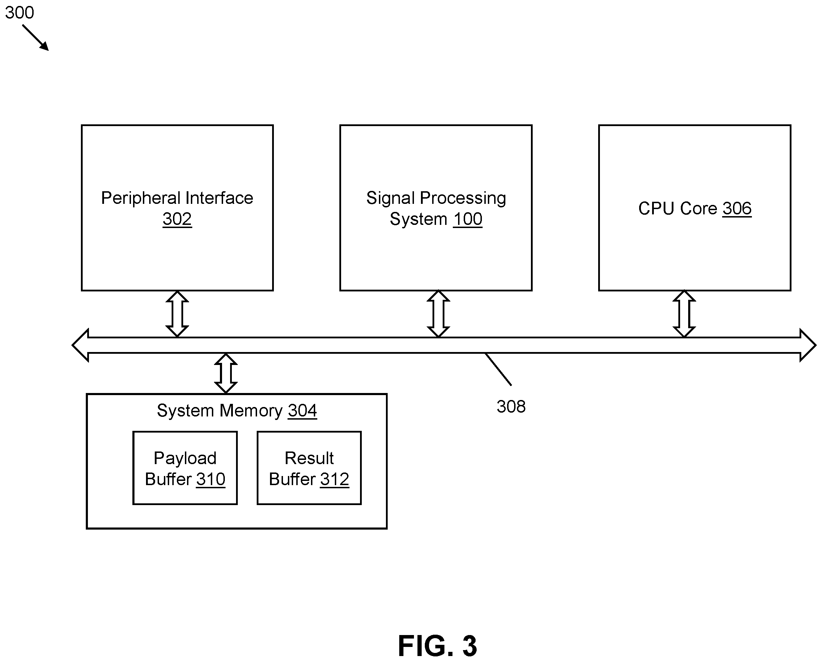

The data cache 116 may be coupled to the control core circuit 110. The data cache 116 may include suitable circuitry that may be configured to perform one or more operations. For example, the data cache 116 may be configured to facilitate storage of the external dataset that may be required for facilitating the RADAR signal processing. The external dataset may be received from a system memory (shown later in FIG. 3) that is external to the signal processing system 100. The data cache 116 may be further configured to store data to be transferred to the system memory. An example of the data cache 116 may be level 1 data cache.

### Instruction cache 118:

The instruction cache118 may be coupled to the control core circuit 110. The instruction cache116 may include suitable circuitry that may be configured to perform one or more operations. For example, the instruction cache 118 may be configured to buffer an external plurality of instructions received from the system memory that may be required for facilitating the RADAR signal processing. An example of the instruction cache 118 may be level 1 instruction cache.

### Second memory 120:

The second memory 120 may be coupled to the processing circuit memory 108. The second memory 120 may include suitable circuitry that may be configured to perform one or more operations. For example, the second memory 120 may be coupled to a set of external circuits (not shown) and facilitate a transfer of the sensor payload to the processing circuit memory 108. Further, the second memory 120 may be configured to facilitate the transfer of the RADAR data stored in the processing circuit memory 108 to the system memory that is external to the signal processing system 100. An example of the second memory 120 may be queue-based peripheral direct memory access (QPDMA).

Although it is described that the first plurality of independent tasklets includes eight independent tasklets, the second plurality of independent tasklets includes two independent tasklets, and the first plurality of dependent tasklets includes three dependent tasklets, the scope of the present disclosure is not limited to it. In various embodiments, the first plurality of independent tasklets may include more than or less than eight independent tasklets. Similarly, the second plurality of independent tasklets may include more than two independent tasklets and the first plurality of dependent tasklets may include more than three dependent tasklets.

Although it is described that the plurality of flows includes three flows, the scope of the present disclosure is not limited to it. In various embodiments, the plurality of flows may include more than three flows.

Although the signal processing system 100 is described for RADAR signal processing, the scope of the present disclosure is not limited to it. In additional embodiments, the signal processing system may be utilized for various applications such as health care and biomedical monitoring, industrial monitoring, or the like.

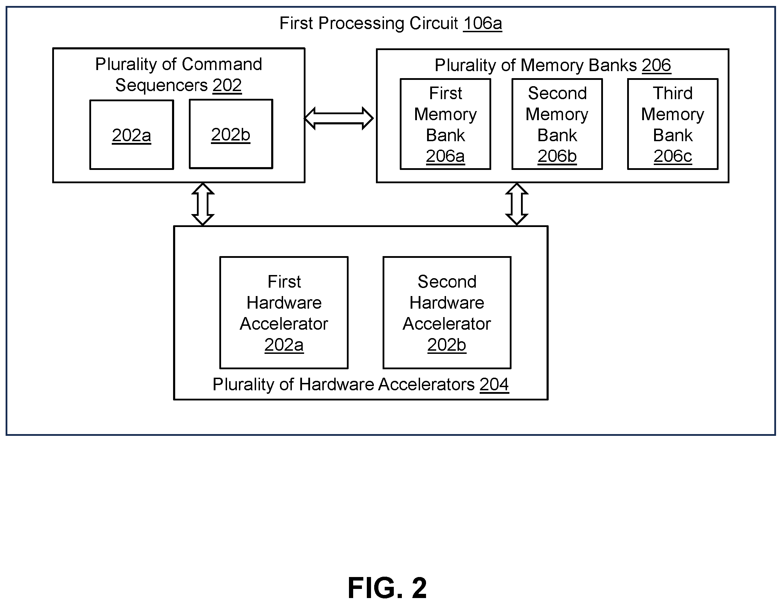

FIG. 2 illustrates a block diagram of the first processing circuit 106a of the signal processing system 100 in accordance with an embodiment of the present disclosure. The first processing circuit 106a may include a plurality of command sequencers 202, a plurality of hardware accelerators 204, and a plurality of memory banks 206. The plurality of command sequencers 202 may be coupled to the plurality of hardware accelerators 204, respectively. Further, the plurality of command sequencers 202 and the plurality of hardware accelerators 204 may be coupled to the plurality of memory banks 206. The plurality of command sequencers 202 may include a first command sequencer 202a and a second command sequencer 202b. The plurality of hardware accelerators 204 may include a first hardware accelerator 204a and a second hardware accelerator 204b. The plurality of memory banks 206 may include a first memory bank 206a, a second memory bank 206b, and a third memory bank 206c.

### Plurality of command sequencers 202:

Each command sequencer may include suitable circuitry (e.g., one or more data interfaces, one or more processors, one or more logic circuits, one or more data storage structures, or a combination thereof) that may be configured to perform one or more operations. For example, the first command sequencer 202a may be configured to receive the reference address for the plurality of instructions of the first independent tasklet 128a. Further, the first command sequencer 202a may be configured to retrieve the plurality of instructions of the first independent tasklet 128a from the tasklet memory 125. Further, during the execution of the first independent tasklet on the first processing circuit 106a, the first command sequencer 202a may be configured to execute an instruction of the retrieved plurality of instructions on the first hardware accelerator 204a of the plurality of hardware accelerators 204.

In some embodiments, the first independent tasklet 128a may include a plurality of instruction threads. Each instruction thread may include a set of instructions. An instruction thread may correspond to a sub-operation of a corresponding independent tasklet that may be performed independently of the remaining instruction threads of the plurality of instruction threads. In such embodiments, during the execution of the first independent tasklet 128a on the first processing circuit 106a, at least two command sequencers of the plurality of command sequencers 202 may be configured to execute corresponding two instruction threads of the plurality of instruction threads on corresponding two hardware accelerators of the plurality of hardware accelerators 204, parallelly.

In an example, the plurality of instruction threads may include a first instruction thread and a second instruction thread. Further, the first command sequencer 202a and the second command sequencer 202b may be configured to receive the reference address for the first instruction thread and the second instruction thread, respectively. Further, the first command sequencer 202a may be configured to retrieve the set of instructions of the first thread. Similarly, the second command sequencer 202b may be configured to retrieve the set of instructions of the first thread. Further, the first command sequencer 202a and the second command sequencer 202b may parallelly execute the first instruction thread and the second instruction thread on the first hardware accelerator 204a and the second hardware accelerator 204b, respectively.

### Plurality of hardware accelerators 204:

Each hardware accelerator may include suitable circuitry (e.g., one or more data interfaces, one or more processors, one or more logic circuits, one or more data storage structures, or a combination thereof) that may be configured to perform one or more operations. For example, the plurality of hardware accelerators 204 may be configured to generate the RADAR data based on the execution of the plurality of instructions of the first independent tasklet 128a. The plurality of hardware accelerators 204 may be further configured to fetch the first sensor data and a set of operands from the plurality of memory banks 206 and utilize the fetched first sensor data and the set of operands for the generation of the RADAR data. In an example, the first independent tasklet 128a may be associated with a Range FFT operation for the first chirp generated by the first sensor 101a. In such an example, the first sensor data may correspond to input vectors. Further, the execution of the plurality of instructions may correspond to the performance of a Range FFT operation on the input vectors by utilizing the complex coefficients.

### Plurality of memory banks 206:

Each memory bank may include suitable circuitry that may be configured to perform one or more operations. For example, the first memory bank 206a may be configured to store the first sensor data that may correspond to input vectors. Further, the second memory bank 206b may be configured to store the set of operands that may correspond to complex coefficients associated with the RADAR signal processing. Furthermore, the third memory bank 206c may be configured to store the RADAR data. In an example, the first memory bank 206a may correspond to an operand RAM, the second memory bank 206b may correspond to a twiddle RAM, and the third memory bank 206c may correspond to a work register.

In some embodiments, at least one hardware accelerator of the plurality of hardware accelerators 204 may fetch RADAR data stored in the third memory bank 206c for execution of a corresponding instruction thread.

Although not shown, the first processing circuit 106a may further include a peripheral interface that facilitates the tasklet scheduler circuit 124 to receive the status of each hardware accelerator of the plurality of hardware accelerators 204. Additionally, the first processing circuit 106a may further include a shared memory DMA (SMDMA) that may be configured to facilitate the transfer of the set of operands and the first sensor data stored in the processing circuit memory 108 to the plurality of memory banks 206 and transfer of the RADAR data from the plurality of memory banks 206 to the processing circuit memory 108.

Although it is described that the plurality of command sequencers 202 includes two command sequencers, the scope of the present disclosure is not limited to it. In various embodiments, the plurality of command sequencers 202 may include more than or less than two command sequencers. Thus, each processing circuit of the first set of processing circuits may include a set of command sequencers.

Although it is described that the plurality of hardware accelerators 204 includes two hardware accelerators, the scope of the present disclosure is not limited to it. In various embodiments, the plurality of hardware accelerators 204 may include more than or less than two hardware accelerators. Thus, each processing circuit of the first set of processing circuits may include a set of hardware accelerators.

Although FIG. 2 describes the first processing circuit 106a, the scope of the present disclosure is not limited to it. In some embodiments, each processing circuit of the plurality of processing circuits 106 may be similar to the first processing circuit 106a despite varied processing capabilities.

FIG. 3 illustrates a schematic diagram of an SoC 300 that implements the signal processing system 100 in accordance with an embodiment of the present disclosure. The SoC 300 may include a peripheral interface 302, the system memory (hereinafter referred to as "the system memory 304"), the signal processing system 100, and a CPU core 306. The peripheral interface 302, the system memory 304, the signal processing system 100, and the CPU core 306 may be communicatively coupled to each other by way of a communication bus 308. The system memory 304 may include a payload buffer 310 and a result buffer 312.

### Peripheral interface 302:

The peripheral interface 302 may include suitable circuitry that may be configured to perform one or more operations. For example, the peripheral interface 302 may be configured to communicatively couple the SoC 300 to a set of external modules (such as the plurality of sensors 101). Examples of the peripheral interface 302 may include a UART, an SPI, a GPIO, an Ethernet (ENET) media access control (MAC), a controller area network, a peripheral component interconnect express, or the like. For the sake of ongoing discussion, it is assumed that the peripheral interface 302 may correspond to an ENET MAC.

The peripheral interface 302 may be configured to receive a plurality of data streams (for example, the plurality of sensor signals). In an example, the plurality of data streams may be associated with a set of sensors of the plurality of sensors 101. Each data stream of the plurality of data streams may be distinguished by ENET header fields. The peripheral interface 302 may be further configured to process the ENET header field of each data stream and extract the payload from ENET frame of the corresponding data stream. Further, the peripheral interface 302 may be configured to store the extracted payload in the payload buffer 310. The peripheral interface 302 may be further configured to send a message to the signal processing system 100 indicating that the extracted payload is stored in the payload buffer 310.

In some embodiments, the payload buffer 310 may be a circular buffer that includes a set of chirps. In some more embodiments, the payload buffer 310 may be a full RADAR cube buffer with data from a complete ENET frame.

### Signal processing system 100:

The signal processing system 100 may be configured to receive the message from the peripheral interface 302. The message may indicate that payload is available in the payload buffer. Further, the signal processing system 100 may be configured to load the payload stored in the payload buffer 310 into the processing circuit memory 108 by way of the second memory 120 based on the reception of the message. Furthermore, the signal processing system 100 may be configured to process the payload to facilitate the RADAR signal processing as described in FIG. 1. In other words, the message may act as a trigger for the execution of one or more tasklets to facilitate the RADAR signal processing. The signal processing system 100 may be further configured to generate result data based on the processing of the payload. Further, the signal processing system 100 may be configured to store the result data in the result buffer 312. Upon storing the result data in the result buffer 312, the signal processing system 100 may be further configured to send a notification to the CPU core 306 indicating the completion of the RADAR signal processing.

### System memory 304:

The system memory 304 may include suitable circuitry to perform one or more operations. For example, the system memory 304 may be configured to facilitate the storage of the payload and the result data. Examples of the system memory 304 may include a static RAM, a dynamic RAM, or the like.

### CPU core 306:

The CPU core 306 may include suitable circuitry (e.g., one or more data interfaces, one or more processors, one or more logic circuits, one or more data storage structures, or a combination thereof) that may be configured to perform one or more operations. For example, the CPU core 306 may be triggered from the signal processing system 100. Further, the CPU core 306 may be configured to fetch the result data from the result buffer 312. Furthermore, the CPU core 306 may be configured to reformat the result data to output the result data via the peripheral interface 302.

In some embodiments, the payload buffer 310 may be a part of the processing circuit memory 108 instead of the system memory 304. In such embodiments, the signal processing system 100 may further include a back-door DMA that is configured to facilitate the peripheral interface 302 to load the payload into the payload buffer 310 of the processing circuit memory 108.

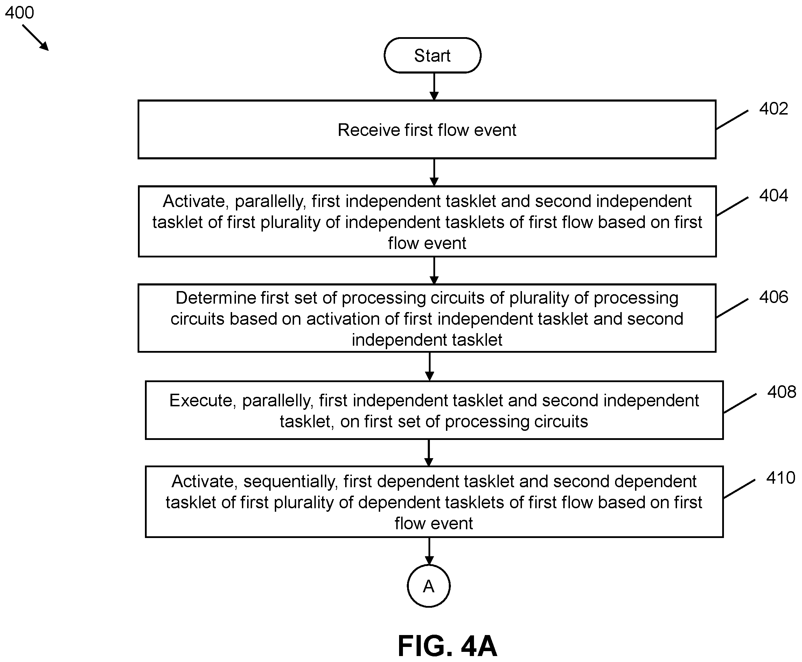

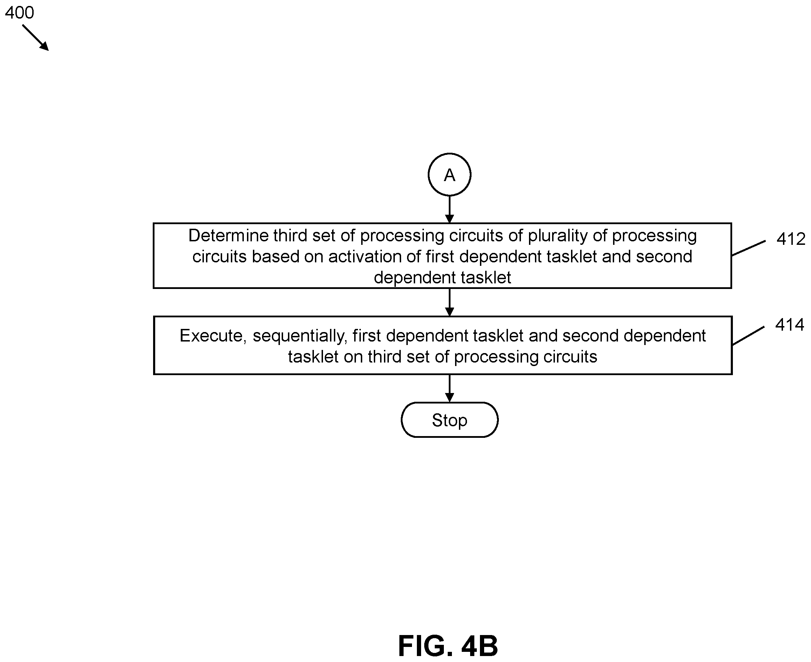

FIGS. 4A and 4B, collectively, represent a flowchart 400 that illustrates a signal processing method by the signal processing system 100 in accordance with an embodiment of the present disclosure.

Referring to FIG. 4A, at step 402, the first flow event FE1 may be received by the orchestration circuitry 104. The first flow event FE1 may be associated with the first flow 126. The first flow 126 may be associated with the first sensor 101a of the plurality of sensors 101. Thus, the first flow event FE1 may correspond to a trigger for the first flow 126.

At step 404, the first independent tasklet 128a and the second independent tasklet 128b of the first plurality of independent tasklets of the first flow 126 may be parallelly activated by the orchestration circuitry 104 based on the first flow event FE1. At step 406, the first set of processing circuits of the plurality of processing circuits 106 may be determined by the orchestration circuitry 104 based on the activation of the first independent tasklet 128a and the second independent tasklet 128b.

At step 408, the first independent tasklet 128a and the second independent tasklet 128b may be executed parallelly, on the first set of processing circuits by the orchestration circuitry 104. At step 410, the first dependent tasklet 134a and the second dependent tasklet 134b of the first plurality of dependent tasklets of the first flow 126 may be activated sequentially based on the first flow event FE1.

Referring to FIG. 4B, at step 412, the third set of processing circuits of the plurality of processing circuits 106 may be determined by the orchestration circuitry 104 based on activation of the first dependent tasklet 134a and the second dependent tasklet 134b. At step 414, the first dependent tasklet 134a and the second dependent tasklet 134b may be executed sequentially on the third set of processing circuits.

The present disclosure discloses the signal processing system 100 that facilitates sharing of the resources (e.g., the plurality of processing circuits 106) among the plurality of sensors 101. This is in contrast to conventional solutions where processing circuits are exclusively assigned to particular sensors during the design phase of signal processing systems. The resource sharing functionality may eliminate a need for exclusive assignment of a set of processing circuits for a sensor. As a result, the signal processing system may facilitate scaling a number of sensors associated therewith without a need to correspondingly increase the number of the processing circuits. A set of processing circuits from the plurality of processing circuits 106 may be determined and utilized to execute the set of flows associated with a sensor based on the reception of the flow event associated with the corresponding sensor in real time. In other words, the set of processing circuits may be assigned to the signal processing associated with a sensor in real time. Thus, the signal processing system 100 of the present disclosure may support data driven scheduling of sensor processing. A complexity of the parallel signal processing for two or more sensors may be less than or equal to a complexity of the signal processing system 100. Additionally, the signal processing system 100 may facilitate signal processing for one sensor where the complexity of signal processing for one sensor may be equivalent to the complexity of the parallel signal processing for two or more sensors. In other words, resources (e.g., the plurality of processing circuits 106) of the signal processing system 100 may be efficiently utilized. Further, the RADAR signal processing may remain unaffected irrespective of the change in mode of operation of a set of sensors during the signal processing in the signal processing system 100 as the flows associated with the set of sensors are scheduled in real-time.

In an embodiment of the present disclosure, a signal processing system is disclosed. The signal processing system may comprise a plurality of processing circuits shared among a plurality of sensors. The signal processing system may further include orchestration circuitry coupled to the plurality of processing circuits. The orchestration circuitry may be configured to receive a first flow event associated with a first flow. The first flow may be associated with a first sensor of the plurality of sensors, and may comprise a first plurality of independent tasklets. The orchestration circuitry may be further configured to activate, parallelly, a first independent tasklet and a second independent tasklet, of the first plurality of independent tasklets based on the first flow event. Further, the orchestration circuitry may be configured to determine a first set of processing circuits of the plurality of processing circuits based on the activation of the first independent tasklet and the second independent tasklet. Furthermore, the orchestration circuitry may be configured to execute, parallelly, the first independent tasklet and the second independent tasklet, on the first set of processing circuits.

In some embodiments, the orchestration circuitry may be further configured to receive a second flow event associated with a second flow. The second flow may be associated with the first sensor, and may comprise a second plurality of independent tasklets. Further, the orchestration circuitry may be configured to activate, parallelly, a third independent tasklet and a fourth independent tasklet, of the second plurality of independent tasklets based on the second flow event. The first independent tasklet, the second independent tasklet, the third independent tasklet, and the fourth independent tasklet are activated, parallelly. The orchestration circuitry may be further configured to determine a second set of processing circuits of the plurality of processing circuits based on the activation of the third independent tasklet and the fourth independent tasklet. Further, the orchestration circuitry may be configured to execute, parallelly, the third independent tasklet and the fourth independent tasklet, on the second set of processing circuits. The first independent tasklet, the second independent tasklet, the third independent tasklet, and the fourth independent tasklet are executed, parallelly.

In some embodiments, the orchestration circuitry may be further configured to receive a second flow event associated with a second flow. The second flow may be associated with a second sensor of the plurality of sensors, and may comprise a second plurality of independent tasklets. Further, the orchestration circuitry may be configured to activate, parallelly, a third independent tasklet and a fourth independent tasklet, of the second plurality of independent tasklets based on the second flow event. The first independent tasklet, the second independent tasklet, the third independent tasklet, and the fourth independent tasklet are activated, parallelly. The orchestration circuitry may be further configured to determine a second set of processing circuits of the plurality of processing circuits based on the activation of the third independent tasklet and the fourth independent tasklet. Further, the orchestration circuitry may be configured to execute, parallelly, the third independent tasklet and the fourth independent tasklet, on the second set of processing circuits. The first independent tasklet, the second independent tasklet, the third independent tasklet, and the fourth independent tasklet are executed, parallelly.

In some embodiments, the orchestration circuitry may be further configured to receive a third flow event associated with a third flow. The third flow may be associated with a second sensor of the plurality of sensors, and may comprise a third plurality of independent tasklets. Further, the orchestration circuitry may be configured to activate, parallelly, a third independent tasklet and a fourth independent tasklet, of the third plurality of independent tasklets based on the third flow event. The orchestration circuitry may be further configured to determine the first set of processing circuits based on the activation of the third independent tasklet and the fourth independent tasklet. Further, the orchestration circuitry may be configured to execute, parallelly, the third independent tasklet and the fourth independent tasklet, on the first set of processing circuits.

In some embodiments, the first independent tasklet is executed on a first processing circuit of the first set of processing circuits and the second independent tasklet is executed on a second processing circuit of the first set of processing circuits.

In some embodiments, the first flow event may comprise a first independent tasklet event and a second independent tasklet event. The activation of the first independent tasklet and the second independent tasklet may be based on the first independent tasklet event and the second independent tasklet event, respectively.

In some embodiments, the first flow further comprises a first plurality of dependent tasklets. The orchestration circuitry may be further configured to activate, sequentially, a first dependent tasklet and a second dependent tasklet of the first plurality of dependent tasklets based on the first flow event. Further, the orchestration circuitry may be configured to determine a third set of processing circuits of the plurality of processing circuits based on the activation of the first dependent tasklet and the second dependent tasklet. The orchestration circuitry may be further configured to execute, sequentially, the first dependent tasklet and the second dependent tasklet on the third set of processing circuits.

In some embodiments, the first flow event may comprise a dependent tasklet event. The first dependent tasklet may be activated based on the dependent tasklet event. Further, the second dependent tasklet may be activated based on the activation of the first dependent tasklet.

In some embodiments, the second dependent tasklet is executed upon completion of the execution of the first dependent tasklet.

In some embodiments, the first dependent tasklet and the second dependent tasklet are sequentially executed on a first processing circuit of the third set of processing circuits.

In some embodiments, the first dependent tasklet and the second dependent tasklet are sequentially executed on a first processing circuit and a second processing circuit of the third set of processing circuits, respectively.

In some embodiments, the signal processing system may further comprise a processing circuit memory coupled to the plurality of processing circuits. The first processing circuit may be configured to generate first data based on the execution of the first dependent tasklet and store the first data in the processing circuit memory. The second processing circuit may be configured to retrieve the first data from the processing circuit memory. The execution of the second dependent tasklet is based on the first data.

In some embodiments, the orchestration circuitry may be further configured to activate, sequentially, a third dependent tasklet and a fourth dependent tasklet of a third flow based on the execution of the second dependent tasklet. The orchestration circuitry may be further configured to determine a fourth set of processing circuits of the plurality of processing circuits based on the activation of the third dependent tasklet and the fourth dependent tasklet. Further, the orchestration circuitry may be configured to execute, sequentially, the third dependent tasklet and the fourth dependent tasklet on the fourth set of processing circuits.

In some embodiments, the orchestration circuitry may be further configured to activate, parallelly, a fifth independent tasklet and a sixth independent tasklet of the first flow based on the execution of the second dependent tasklet. The orchestration circuitry may be further configured to determine a fifth set of processing circuits of the plurality of processing circuits based on the activation of the fifth independent tasklet and the sixth independent tasklet. Further, the orchestration circuitry may be configured to execute, parallelly, the fifth independent tasklet and the sixth independent tasklet on the fifth set of processing circuits.

In some embodiments, the orchestration circuitry may be further configured to activate, a fifth dependent tasklet of the first plurality of dependent tasklets based on the execution of the fifth independent tasklet and the sixth independent tasklet. Further, the orchestration circuitry may be configured to determine a first processing circuit of the plurality of processing circuits based on the activation of the fifth dependent tasklet. Furthermore, the orchestration circuitry may be configured to execute, the first dependent tasklet on the third processing circuit.

In some embodiments, the orchestration circuitry may be further configured to activate, parallelly, a seventh independent tasklet and an eighth independent tasklet of the first plurality of independent tasklets based on the first flow event. Further, the orchestration circuitry may be configured to determine a sixth set of processing circuits of the plurality of processing circuits based on the activation of the seventh independent tasklet and the eighth independent tasklet. Furthermore, the orchestration circuitry may be configured to arbitrate execution of the seventh independent tasklet and the eighth independent tasklet on the sixth set of processing circuits.

In some embodiments, the first independent tasklet may be executed on a first processing circuit of the first set of processing circuits. Further, the first independent tasklet comprises a plurality of instructions. Further, the first processing circuit may comprise a set of hardware accelerators and a set of command sequencers. During the execution of the first independent tasklet on the first processing circuit, a first command sequencer of the set of command sequencers may be configured to execute an instruction of the plurality of instructions on a first hardware accelerator of the set of hardware accelerators.

In some embodiments, the first independent tasklet may be executed on a first processing circuit of the first set of processing circuits. Further, the first independent tasklet comprises a plurality of instruction threads. Furthermore, the first processing circuit comprises a plurality of hardware accelerators and a plurality of command sequencers. During the execution of the first independent tasklet on the first processing circuit, at least two command sequencers of the plurality of command sequencers may be configured to execute corresponding two instruction threads of the plurality of instruction threads on corresponding two hardware accelerators of the plurality of hardware accelerators, parallelly.

In certain embodiments of the present disclosure, a signal processing system is disclosed. The signal processing system may comprise a memory, a plurality of processing circuits, and orchestration circuitry coupled to the memory and the plurality of processing circuits. The plurality of processing circuits may be shared among a plurality of sensors. Further, the memory may be configured to store a first plurality of independent tasklets of a first flow associated with a first sensor of the plurality of sensors. The orchestration circuitry may be configured to receive a first flow event associated with the first flow. The orchestration circuitry may be further configured to activate, parallelly, a first independent tasklet and a second independent tasklet, of the first plurality of independent tasklets based on the first flow event. Further, the orchestration circuitry may be configured to determine a first set of processing circuits of the plurality of processing circuits based on the activation of the first independent tasklet and the second independent tasklet. Furthermore, the orchestration circuitry may be configured to execute, parallelly, the first independent tasklet and the second independent tasklet, on the first set of processing circuits.

In certain additional embodiments of the present disclosure, a signal processing method is disclosed, The signal processing method may comprise receiving, by orchestration circuitry of a signal processing system, a first flow event associated with a first flow. The first flow may be associated with a first sensor of the plurality of sensors, and may comprise a first plurality of independent tasklets. The signal processing method may further comprise activating, by the orchestration circuitry, parallelly, a first independent tasklet and a second independent tasklet, of the first plurality of independent tasklets based on the first flow event. Further, the signal processing method may comprise determining, by the orchestration circuitry, a first set of processing circuits of a plurality of processing circuits of the signal processing system based on the activation of the first independent tasklet and the second independent tasklet. The plurality of processing circuits may be shared among the plurality of sensors. Additionally, the signal processing method may comprise executing, by the orchestration circuitry, parallelly, the first independent tasklet and the second independent tasklet on the first set of processing circuits.

While various embodiments of the present disclosure have been illustrated and described, it will be clear that the present disclosure is not limited to these embodiments only. Numerous modifications, changes, variations, substitutions, and equivalents will be apparent to those skilled in the art, without departing from the scope of the present disclosure, as described in the claims. Further, unless stated otherwise, terms such as "first" and "second" are used to arbitrarily distinguish between the elements such terms describe. Thus, these terms are not necessarily intended to indicate temporal or other prioritization of such elements. The term "coupled" may refer to at least one of direct or indirect coupling that may not necessarily be by way of mechanical or any physical means. Further, a system or method that "comprises", "has", or "includes" one or more elements possesses those one or more elements but is not limited to possessing only those one or more elements.

## Claims

1. A signal processing system, comprising:
a plurality of processing circuits shared among a plurality of sensors; and
orchestration circuitry coupled to the plurality of processing circuits, wherein the orchestration circuitry is configured to:
receive a first flow event associated with a first flow, wherein the first flow is associated with a first sensor of the plurality of sensors, and comprises a first plurality of independent tasklets;
activate, parallelly, a first independent tasklet and a second independent tasklet, of the first plurality of independent tasklets based on the first flow event;
determine a first set of processing circuits of the plurality of processing circuits based on the activation of the first independent tasklet and the second independent tasklet; and
execute, parallelly, the first independent tasklet and the second independent tasklet, on the first set of processing circuits.

2. The signal processing system of claim 1, wherein the orchestration circuitry is further configured to:
receive a second flow event associated with a second flow, wherein the second flow is associated with the first sensor, and comprises a second plurality of independent tasklets;
activate, parallelly, a third independent tasklet and a fourth independent tasklet, of the second plurality of independent tasklets based on the second flow event, wherein the first independent tasklet, the second independent tasklet, the third independent tasklet, and the fourth independent tasklet are activated, parallelly;
determine a second set of processing circuits of the plurality of processing circuits based on the activation of the third independent tasklet and the fourth independent tasklet; and
execute, parallelly, the third independent tasklet and the fourth independent tasklet, on the second set of processing circuits, wherein the first independent tasklet, the second independent tasklet, the third independent tasklet, and the fourth independent tasklet are executed, parallelly.

3. The signal processing system of claim 1 or 2, wherein the orchestration circuitry is further configured to:
receive a second flow event associated with a second flow, wherein the second flow is associated with a second sensor of the plurality of sensors, and comprises a second plurality of independent tasklets;
activate, parallelly, a third independent tasklet and a fourth independent tasklet, of the second plurality of independent tasklets based on the second flow event, wherein the first independent tasklet, the second independent tasklet, the third independent tasklet, and the fourth independent tasklet are activated, parallelly;
determine a second set of processing circuits of the plurality of processing circuits based on the activation of the third independent tasklet and the fourth independent tasklet; and
execute, parallelly, the third independent tasklet and the fourth independent tasklet, on the second set of processing circuits, wherein the first independent tasklet, the second independent tasklet, the third independent tasklet, and the fourth independent tasklet are executed, parallelly.

4. The signal processing system of any preceding claim, wherein the orchestration circuitry is further configured to:
receive a third flow event associated with a third flow, wherein the third flow is associated with a second sensor of the plurality of sensors, and comprises a third plurality of independent tasklets;
activate, parallelly, a third independent tasklet and a fourth independent tasklet, of the third plurality of independent tasklets based on the third flow event;
determine the first set of processing circuits based on the activation of the third independent tasklet and the fourth independent tasklet; and
execute, parallelly, the third independent tasklet and the fourth independent tasklet, on the first set of processing circuits.

5. The signal processing system of any preceding claim, wherein the first independent tasklet is executed on a first processing circuit of the first set of processing circuits, and wherein the second independent tasklet is executed on a second processing circuit of the first set of processing circuits.

6. The signal processing system of any preceding claim, wherein
the first flow event comprises a first independent tasklet event and a second independent tasklet event; and
the activation of the first independent tasklet and the second independent tasklet are based on the first independent tasklet event and the second independent tasklet event, respectively.

7. The signal processing system of any preceding claim, wherein
the first flow further comprises a first plurality of dependent tasklets, and
the orchestration circuitry is further configured to:
activate, sequentially, a first dependent tasklet and a second dependent tasklet of the first plurality of dependent tasklets based on the first flow event;
determine a third set of processing circuits of the plurality of processing circuits based on the activation of the first dependent tasklet and the second dependent tasklet; and
execute, sequentially, the first dependent tasklet and the second dependent tasklet on the third set of processing circuits.

8. The signal processing system of claim 7, wherein:
the first flow event comprises a dependent tasklet event;
the first dependent tasklet is activated based on the dependent tasklet event; and
the second dependent tasklet is activated based on the activation of the first dependent tasklet.

9. The signal processing system of claim 7 or 8, wherein the second dependent tasklet is executed upon completion of the execution of the first dependent tasklet.

10. The signal processing system of claim 9, wherein the first dependent tasklet and the second dependent tasklet are sequentially executed on a first processing circuit of the third set of processing circuits.

11. The signal processing system of claim 9, wherein the first dependent tasklet and the second dependent tasklet are sequentially executed on a first processing circuit and a second processing circuit of the third set of processing circuits, respectively.

12. The signal processing system of claim 11, further comprising a processing circuit memory coupled to the plurality of processing circuits, wherein
the first processing circuit is configured to:
generate first data based on the execution of the first dependent tasklet; and
store the first data in the processing circuit memory; and
the second processing circuit is configured to:
retrieve the first data from the processing circuit memory, wherein the execution of the second dependent tasklet is based on the first data.

13. The signal processing system of any of claims 7 to 12, wherein the orchestration circuitry is further configured to:
activate, sequentially, a third dependent tasklet and a fourth dependent tasklet of a third flow based on the execution of the second dependent tasklet;
determine a fourth set of processing circuits of the plurality of processing circuits based on the activation of the third dependent tasklet and the fourth dependent tasklet; and
execute, sequentially, the third dependent tasklet and the fourth dependent tasklet on the fourth set of processing circuits.

14. The signal processing system of any of claims 7 to 13, wherein the orchestration circuitry is further configured to:
activate, parallelly, a fifth independent tasklet and a sixth independent tasklet of the first flow based on the execution of the second dependent tasklet;
determine a fifth set of processing circuits of the plurality of processing circuits based on the activation of the fifth independent tasklet and the sixth independent tasklet; and
execute, parallelly, the fifth independent tasklet and the sixth independent tasklet on the fifth set of processing circuits.

15. A signal processing method, comprising:
receiving, by orchestration circuitry of a signal processing system, a first flow event associated with a first flow, wherein the first flow is associated with a first sensor of a plurality of sensors and comprises a first plurality of independent tasklets;
activating, by the orchestration circuitry, parallelly, a first independent tasklet and a second independent tasklet, of the first plurality of independent tasklets based on the first flow event;
determining, by the orchestration circuitry, a first set of processing circuits of a plurality of processing circuits of the signal processing system based on the activation of the first independent tasklet and the second independent tasklet, wherein the plurality of processing circuits are shared among the plurality of sensors; and
executing, by the orchestration circuitry, parallelly, the first independent tasklet and the second independent tasklet on the first set of processing circuits.
